Europäisches Patentamt

European Patent Office

Office européen des brevets

(11) Publication number: **0 426 855 A1**

# EUROPEAN PATENT APPLICATION
## published in accordance with Art. 158(3) EPC

(21) Application number: 90901704.8

(22) Date of filing: 05.01.90

(86) International application number:
PCT/SU90/00001

(87) International publication number:
WO 90/07800 (12.07.90 90/16)

(51) Int. Cl.5: **H01P 1/16, H01J 23/36**

(30) Priority: 05.01.89 SU 4632681

(43) Date of publication of application:
15.05.91 Bulletin 91/20

(84) Designated Contracting States:
CH DE FR GB LI

(71) Applicant: INSTITUT PRIKLADNOI FIZIKI
AKADEMII NAUK SSSR
ul. Ulyanova, 46
Gorky, 603600(SU)

(72) Inventor: VINOGRADOV, Dmitry Vadimovich
pr. Dzerzhinskogo, 9-15
Dzerzhinsk, 606000(SU)
Inventor: DENISOV, Grigory Gennadievich
ul. Generala Ivlieva, 14-1-43
Gorky, 603102(SU)
Inventor: PETELIN, Mikhail Ivanovich
ul. Rodionova, 17-42
Gorky, 603120(SU)

(74) Representative: Lawson, David Glynne et al
MARKS & CLERK 57-60 Lincoln's Inn Fields
London WC2A 3LS(GB)

(54) CONVERTER OF HIGHER-ORDER WAVE OF A ROUND WAVEGUIDE INTO A MIRROR-TYPE TRANSMISSION LINE WAVE.

(57) The converter consists of a section (1) of a non-regular waveguide provided on its internal space with a plurality of interconjugating and interchanging SHF focusing and dispersing mirrors (2,3) located along the axis (6) of the section (1) of the non-regular waveguide on a spiral line (8).

FIG.1

Xerox Copy Centre

FIG.5

# CONVERTER OF A HIGH MODE OF A CIRCULAR WAVEGUIDE INTO THE MAIN MODE OF A MIRROR LINE

Technical Field

This invention relates to the wave canalization technique and, concretely, to conversion of a high made of a circular cross-section cylindrical or conical wave-guide into the main wave mode of a mirror line.

Description of the Prior Art

The conversion of high modes of closed waveguides into the main mode of mirror lines is of particular interest for use in gyrotrons being nowadays among the most powerful sources of the shortest microwaves: a megawatt level at mm wavelengths. At the output of its cavity such a gyrotron delivers an $H_{mp}$ mode propagating in a cylindrical or conical waveguide of circular cross-section, the azimuthal (m) and/or the radial (p) indices of the mode being usually much greater than unity (due to the gyrotropy of the electron flow in gyrotron, non-symmetric, $m \neq 0$, modes have transverse field structure rotating around the axis). Meanwhile, the most reliable method to transport microwave radiation over large distances with minimum losses is the use of the paraxial Gaussian wave beam, which can be guided, in particular, by a sequence of mirrors.

The high order $H_{mp}$ modes are usually converted into the paraxial wave beams by devices similar to described in

a) "Izvestiya VUZov (Radiofizika), vol. 17, No. 1, 1974, (Gorki), S.N.Vlasov and I.M. Orlova Kvazioptichesky preobrazovatel voln volnovoda kruglogo secheniya i uskoparaleinei volnovoi puchok pp. 148, 149; and

b) "Radiotekhnika i Elektronika", vol. 20, No. 10, 1975, (Moscow), S.N. Vlasov et al Preobrazovaneye volni shepchushey galerei rasprostranyausheysya v volnovode kruglogo secheneya, pp. 2020-2030.

Such a converter is composed of a circular-crossection cylindrical or conical waveguide section with an non-symmetricoutput cut (aperture) and a metallic reflector (in the simplest case, for axisymmetric modes, a parabolic cylinder) correcting the phase of the radiated wave. The designing of the converter is based, in the lowest approximation, on the presentation of the wave field by a set of rays; in the frame of this approach the phase-correcting reflector is used to impart a common direction to all the rays.

In the high-power gyrotrons, such a converter is usually placed at the end of the output waveguide, between the cavity and the collector, providing separation of electromagnetic and electron flows.

A defect of these converters is the scattering (diffraction) of the wave at edges of the radiating aperture of the cylindrical waveguide. Owing to the diffraction, a considerable part of the wave is radiated into side lobes, so the wave can be converted to the Gaussian beam with efficiency not exceeding 0.85. The non- converted part of the HF radiation can overload some essential elements of the system; in particular, in the gyrotron it can break the dielectric elements of the electron gun or the output window.

For modes with azimuthal index m = 0, to improve the converter, a special transition between the cylindrical waveguide and the radiating aperture was proposed (US, A, 4636689): the cross-section of the transition has to be smoothly varied from cylindrical to elliptical, so that the wave propagating through the transition would acquire the azimuthal structure close to the Gaussian one. However, this reduces the diffraction losses only at a part of edges of the radiating aperture, so, the initial wave can be converted to the beam Gaussian-distributed over the both transverse coordinates with the efficiency still far from unity.

Summary of the Invention

The invention is aimed to convert a high mode, symmetric ( m = 0) or rotating non-symmetric (m≠0), of a circular cross-section waveguide into the wave beam Gaussian-distributed over the both transverse coordinates by means of a section of an irregular waveguide with an optimized inner surface. According to the invention, the latter must be composed of a sequence of conjugate alternating focusing and defocusing mirrors with apices placed at a space spiral (in particular, in a helical line) so, that the radiation propagating through the wave-guide section would attenuate at defocusing mirrors and concentrate at focusing ones.

It is necessary that projections of the apices of the neighboring focusing mirrors at the axis of the section should be separated by the distance

$$L_0 = 2R_0 \sqrt{\left[\frac{2\pi R_0}{\lambda v_{mp}}\right]^2 - 1} \quad \sqrt{1 - \left[\frac{m}{v_{mp}}\right]^2} \quad ,$$

there $R_0$ is the mean radius of the irregular waveguide between the neighboring focusing mirrors, $\lambda$ is the wavelength of microwave radiation, m and p are the azimuthal and the radial indices of the microwave waveguide, respectively,

$v_{mp} = g_{mp}R_0$,

$g_{mp}$ is the transverse wave number of the primary mode; the angle $\gamma$ between the space spiral line and the axis of the irregular waveguide section is given by

$$\gamma = \text{arctg} \left[ \frac{2R_0}{L_0} \quad \text{arccos} \quad \frac{m}{v_{mp}} \right] .$$

The length L of the irregular waveguide section should desirably be at least $3L_0$.

It is also preferable that the difference between the distances from the section axis to the apices of the neighboring focusing and scattering mirrors should increase gradually from zero at the input end of the section to a value equal at least

$$\left[ \frac{2\pi}{v_{mp}} \right]^2 R_0$$

at its output end.

It is further preferable that the surface of each focusing mirror should be essentially part of the quadric surface with a positive Gaussian curvature.

It is advantageous that the last mirror of the irregular waveguide section would be focusing and its boundary be the output end of the section. The proposed device provides a high conversion efficiency for initial modes of both symmetric and non-symmetric types.

Being used in gyrotrons, the proposed converter reduces RF loads on some principal units of these oscillators and, so, promotes obtaining higher radiation powers.

Brief Description of the Drawings

The invention will now be described further with reference to a specific embodiment thereof, taken in conjunction with the accompanying drawings therein:

Fig. 1 is a longitudinal section of a mode converter for an initially symmetric (m = 0) mode according to the invention;

Fig. 2 is the cross-section along II-II of Fig. 1;

Fig. 3 is the cross-section along III-III of Fig.1;

Fig. 4 is the cross-section along IV-IV of Fig. 1;

Fig. 5 is a 3-D image of the body whose outer surface is identical to the inner surface of the irregular waveguide section for the conversion of the initially non-symmetric mode of a circular waveguide according to the invention;

Fig. 6 is a 3-d image of the unfolded surface depicted in Fig. 5 according to the invention; and

Fig. 7 is a schematic representation of the output gyrotron unit comprising the proposed mode converter.

Description of Preferred Embodiments

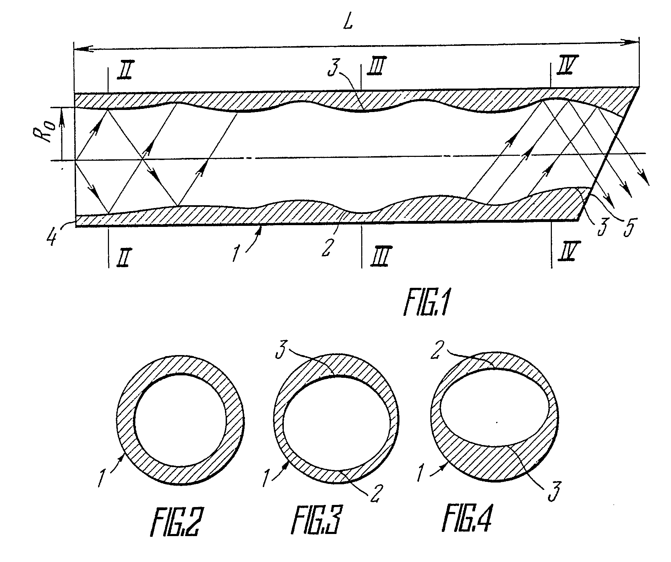

The mode converter being the subject of the present invention comprises irregular waveguide section 1 (Fig.1) having the length L and its inner surface is composed of a number of conjugate focusing mirrors 2 and mirrors 3 scattering microwave radiation. The focusing and scattering microwave mirrors 2 and 3 represent smooth variations of the inner surface of the irregular waveguide section 1 from the input end 4 to its output end 5. The edge of the irregular waveguide section 1 at its input end 4 is shaped as a circle of radius $R_o$, while the edge at the output end 5 is generally the boundary of the last focusing mirror 2.

In the longitudinal direction relative to the axis 6 of the irregular waveguide section 1 the focusing microwave mirrors 2 are concave while the scattering microwave mirrors 3 are "convex", the flexor of the mirrors 2 and 3 gradually increasing from the input end 4 towards the output end 5 of the irregular waveguide section 1.

As an example, the propagation of the rays corresponding to an initially symmetric $H_{op}$ mode is represented symbolically for the preferred embodiment of the invention.

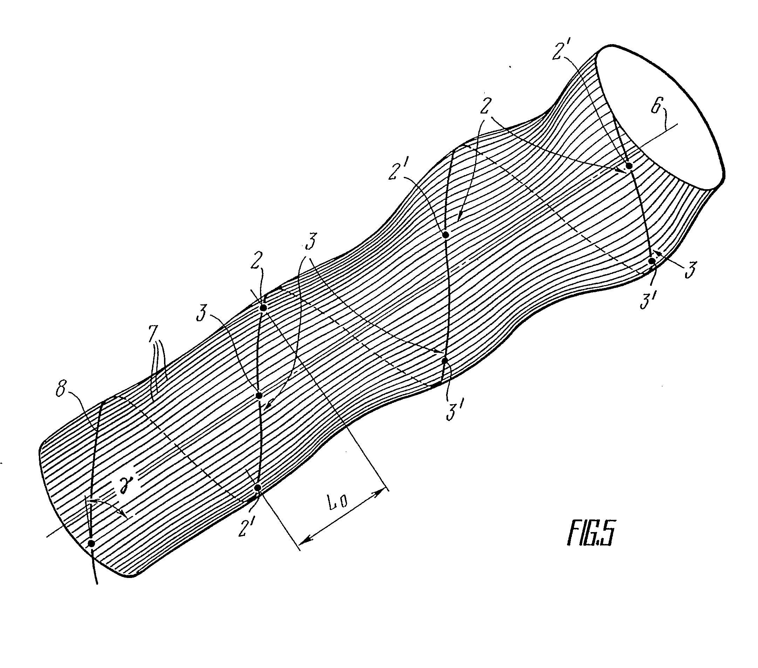

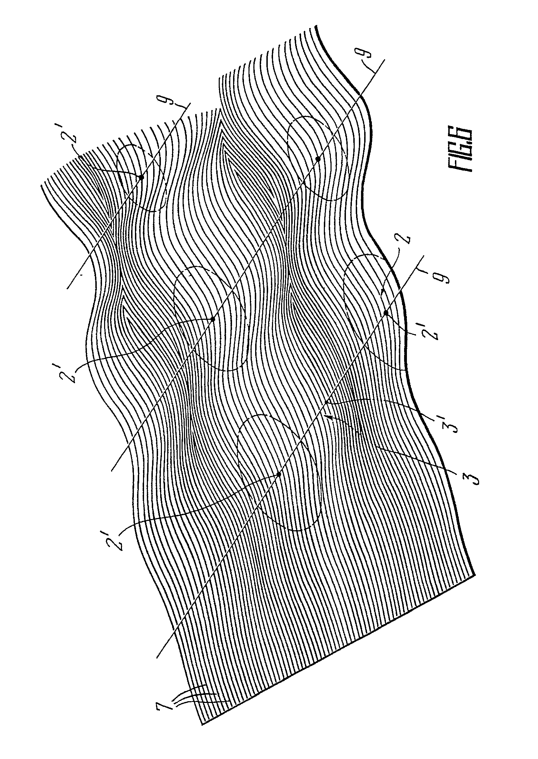

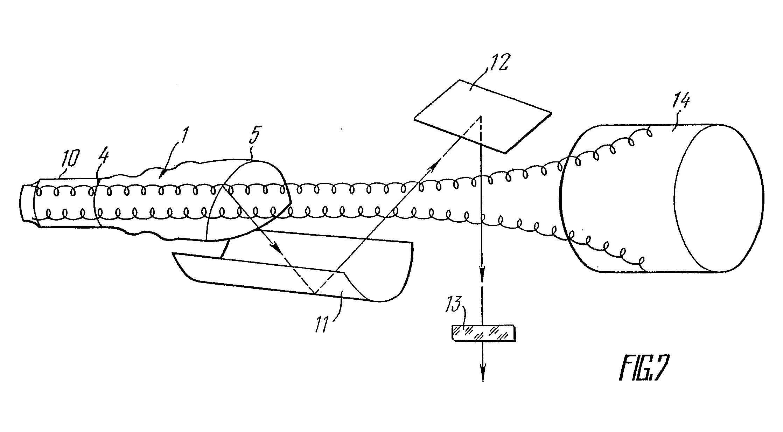

As seen from Fig. 2, 3, and 4, in the azimuthal direction the focusing microwave mirrors 2 have a curvature smaller than that of the inner surface of the irregular waveguide section 1 at its input end 4 while the scattering microwave mirrors 3 change their curvature in a reverse fashion.

To illustrate the inner surface of section 1 of the irregular waveguide for an initially non-symmetric ($m \neq 0$) waveguide mode $H_{mp}$, Fig. 5 represents a spatial view of the body, the outer surface of which is identical to the inner surface of the irregular waveguide section 1.

In fig. 5 the set of longitudinal curves represent generatrices 7 of the waveguide surface separated by equal angles. The generatrices 7 are deformed with respect to those far the initially circular waveguide due to the perturbations producing focusing and scattering mirrors 2 and 3.

The apices $2^1$ and $3^1$ of the focusing 2 and scattering 3 mirrors are placed in alternating sequence along the space spiral (in particular, helical line) 8. The angle $\gamma$ of the spiral line 8 relative to its axis 6 and axial distances $L_o$ between apices placed on the spiral are determined by a ray tracting based on the Brillouin-Keller concept.

In the frame of this concept any mode of a waveguide can be represented as a set of rays successively reflecting from the waveguide walls. In the circular waveguide of radius R each of rays composing $H_{mp}$ mode passes between two reflections the distance

$$L_B = 2R_0 \sqrt{\left[\frac{2\pi R}{\lambda \nu_m}\right]^2 - 1} \sqrt{1 - \left[\frac{m}{\nu_{mp}}\right]^2} \quad (1)$$

in the direction of the wave propagation, and each reflection point is shifted at an angle $\Delta\phi = 2$ arcos

$$\frac{m}{\nu_{mp}}$$

relative to the previous one in the direction of the wave rotation. In (1) $\lambda$ is the wavelength of the radiation; m and p are the azimuthal and the radial indices of the microwave weveguide mode, respectively;

$$\nu_{mp} = g_{mp}R$$

where $g_{mp}$ is the transverse wave number of the mode. The reflection points of the ray are placed at the space spiral line inclined at an angle

$$\gamma_B = \text{arctg} \frac{R\Delta\phi}{L_0} = \text{arctg} \left[\frac{2R}{L_0} \text{arccos} \frac{m}{\nu_{mp}}\right] \quad (2)$$

relative to the waveguide axis.

The formulas (1), (2) are precise for the cylindrical circular cross-section waveguide (in this case R is the radius at the input end of the waveguide), but are applicable also to circular cross-section waveguides with a smoothly varying longitudinal profile, if the variation scale is large compared with L.

Any deformation of the inner waveguide surface results in a change of the ray direction. According to the invention the inner surface of the waveguide is shaped so that the trajectory of one, "equilibrium", ray is not perturbed, while other rays contract to this "equilibrium" ray. To satisfy the condition, the inner surface of the waveguide is composed of the sequence of the alternating along the spiral line 8 focusing 2 and scattering 3 mirrors described above. The apices $2^1$ of the focusing microwave mirrors 2 are arranged at the reflection points of the chosen "equilibrium" ray, i.e., along the axis 6 at a distance $L_0$ from each other, that is approximately equal to $L_B$, whereas the angle $\gamma$ of inclination of the spiral line 8 is taken to be approximate equal to $\gamma_0$. Here we have in mind the generalization of the method proposed for the mode conversion in the waveguide with slow varying (for example, conical) cross-section. Small corrections to $\gamma$ and $L_B$ can be easily found using well-known analytical methods and numerical codes. For the said distribution of the apices $2^1$ of the focusing micro-wave mirrors 2 the distance between the spices $2^1$ and $3^1$ of the adjacent focusing and scattering microwave mirrors 2 and 3 is multiple of $L_0$.

In the frame of the conversion principle. According to the invention boundaries of focusing and scattering microwave mirrors 2 and 3 cannot be pointed unambiguously, and, moreover, the synthesis of the converter surface admits variations in a rather broad variety of functions. The only restriction for the shape of the reflecting surface near an apex of a focusing mirror 2, is that it must be a part of the second-degree surface with a positive Gaussian curvature (tangent to an ellipsoid); due to the latter the synthesized sequence of such surfaces corresponds to a mirror line with parameters belonging to the stable canalization region.

In accordance with the aforesaid, the boundaries of the focusing microwave mirrors 2 are shown in Fig. 6 by dashed lines; the spiral line 8 in Fig. 5 is transformed in Fig. 6 to 5 set of straight lines 9 inclined at an angle $\gamma$ to the projection of the axis 6 onto the unfolded inner surface of the converter.

The term "scattering microwave mirror" implies any part of the waveguide wall surface pressing the incident radiation out to the neighboring focusing microwave mirrors. The basic requirement for the surfaces of scattering microwave mirrors and their conjugations consists in gradual successive redistribution of the radiation from one reflection to another, providing small perturbations of ray directions at each reflection. As a rule, each scattering microwave mirror 3 represents a figure symmetrical about the line 9 in (Fig. 6) near the point located in the middle of the area of the line 9 between the spices $2^1$ of the neighboring focusing microwave mirrors 2. Conventionally, these points are taken as the spices $3^1$ of the scattering mirrors 3.

To ensure a high conversion efficiency, the total length L of the section 1 of the irregular waveguide should exceed appreciably the value $L_0$. Practically, this means that the value L should at least be equal to $3L_0$.

It is seen from the drawing that for both symmetrical and non-symmetrical modes the difference of the distances between the spices of the neighboring focusing (2) and scattering (3) microwave mirrors and the waveguide axis 6 gradually increase. This change is necessary to convert the initial mode to the fundamental eigenmode of the mirror transmission line.

The regular mirror line which would be a continuation of the mode converter can transport the wave flow with sufficiently low diffraction losses, if the flow is bounded by a narrow caustic surface far from the mirror edges. To satisfy this condition, the mirror flexure depth should be not

$$\left[\frac{2\pi}{g_\perp a}\right]^2 \ell_\perp \, ,$$

less than

where gl is the transverse wave number, $l_\perp$ is the distance from the mirror apex to the mirror line axis, and a is the length of the mirrors along the mirror line axis.

Therefore, the initial circular waveguide turns at the length of the section 1 into the low loss mirror line, if the difference of the distances between the waveguide axis 6 and the apices $2^1$, $3^1$ of the neighboring focusing and scattering microwave mirrors 2 and 3 increases up to a value at least equal to

$$\left[\frac{2\pi}{\nu_{mp}}\right]^2 R_0 \qquad\qquad (3)$$

Here it was taken into account that in the proposed converter the quantities a and $I_\perp$ are comparable with the radius R, and the product $g_\perp R$ is equal to $\nu_{mp}$.

In the polar coordinates R, $\psi$ and z, the inner surface of the irregular waveguide section 1 (Fig, 1,5,6) can be given or approximated by

$R = R_0 + A_1 z \cos(h_1 z + ) + A_2 z \cos (h_2 z + n )$,

$0 \leqslant z \leqslant L$,

$0 \leqslant \psi \leqslant 2$,

The numerical coefficients $h_1$, $h_2$, and n are defined by the positions of the spices $2^1$ (Fig. 5) of the focusing microwave mirrors 2. The multiples $A_{1,2}z$ describe the waveguide inner surface deformation increase along the section 1 (Fig. 1). At the end z = L of the converter the deformation depth is

$$2\left[|A_1| + |A_2|\right] L \simeq \left[\frac{2\pi}{\nu_{mp}}\right]^2 R_0 \qquad\qquad (5)$$

The conversion principle implies that the wave beam is extracted from the converter after reflection from the last focusing mirror, the boundary of which being the output edge 5 of the irregular waveguide section 1.

As an application of this converter, Fig. 7 shows an output unit of a gyrotron where a high $H_{mp}$ mode produced in a circular cavity is converted into the main mode of the mirror line by the use of the irregular waveguide section 1, the mean radius of which increases gradually from the input end 4 to the output end 5 the increment scale being large compared with $L_0$. The input 4 of the irregular waveguide section 1 is coupled to the cavity 10, and the output 5 is optically matched to the output window 13 in the gyrotron wall. The matching is provided by phase-correcting mirrors 11 and 12, calculated by conventional methods. The beam of electrons proceeding along helical trajectories after passing through the converter region settles at the collector 14.

The principle of operation of the converter according to the invention can be explained on the basis of the Brillouin-Keller concept. At the input 4 (Fig. 1) of the irregular waveguide section 1 the radiation represents a set of rays uniformly distributed over the focusing and scattering microwave mirrors 2 and 3. Inside the converter, the spices 2' of focusing mirrors 2 are placed quasi-equidistantly at a space spiral 8 so, that an "equilibrium" ray successively reflecting from one focusing apex 2' to another be admitted. As for the other rays, in such a system in the course of successive reflections they contract to the equilibrium one. In particular, rays incident to defocusing parts of the waveguide wall are scattered in directions of neighboring focusing mirrors 2. In the close vicinity of focusing mirror apices 2' the ray contraction is due to the positive Gaussian curvature of the surface.

For initial modes of high order, to provide a sufficiently compact contraction of rays, the strength of focusing and defocusing mirrors 2 and 3 must gradually increase in the propagation direction. In the converter submitted (Fig. 1) this increase can be provided by a change in the difference of the distances between the axis 6 and the spices 2' and 3' of the neighboring focusing 2 and scattering 3 microwave mirrors (Figs. 5 and 6).

The wave beam produced in such a manner can be extracted from the irregular waveguide section 1 without contacting the output edge 5, if the last coincides with the boundary of the last focusing microwave mirror 2.

Furthermore, because the part of the smooth focusing surface in the close vicinity of its apex can always be regarded as quadratic, the wave turns to be Gaussian - distributed over the both transverse coordinates (in an experiment carried out on the basis of the theory, the $H_{1,5}$ mode was converted into the Gaussian beam with efficiency 0.97).

To be built in a practical gyrotron (Fig. 7), the converter, as a rule, is preferable to be limited in its length. At the end of the shortened converter the phase of the wave front can have a large curvature. To correct the wave front and to direct the wave beam at a proper angle through the window 13, additional mirrors 11, 12 can be used.

Thus, the invention provides high-efficiency conversion into the Gaussian wave beam for any high mode of circular waveguide.


Industrial Applicability

This invention can be advantageously used in the electronic industry to elaborate high power devices of the gyrotron type and to develop systems for microwave radiation transmission over large distances, for example in controlled thermonuclear fusion devices.


**Claims**

1. A converter of a high mode of a circular waveguide into the main mode of a mirror line, comprising a section (1) of an irregular waveguide, characterized by that the inner surface of the said section (1) is composed of a sequence of conjugate alternating focusing and scattering microwave mirrors (2, 3) arranged along a spiral line (8) and contracting the microwave radiation to the focusing mirrors (2) and attenuating the microwave radiation at the scattering mirrors (3) as the microwave radiation passes from an input end (4) of the irregular waveguide section (1) towards its output end (5).

2. A converter according to Claim 1, characterized by that apices ($2^1$) of the neighboring focusing microwave mirrors (2) are located along an axis (6) of the section (1) of the irregular waveguide at a distance $L_0$ determined by

$$L_0 = 2 R_0 \sqrt{\left[\frac{2\pi R_0}{\lambda \nu_{mp}}\right]^2 - 1} \; \sqrt{1 - \left[\frac{m}{\nu_{mp}}\right]^2} \; ,$$

where $R_0$ is the mean radius of the irregular waveguide section (1) in the region between the neighboring focusing microwave mirrors (2), $\lambda$ is the microwave radiation wavelength, m and p are the azimuthal and the radial indices of the microwave waveguide mode, $\nu_{mp} = g_{mp} R_0$, where $g_{mp}$ is the transverse wave number of the angle $\gamma$ of the inclination of the spiral line (8) relative to the axis (6) of the section (1) of the irregular waveguide is given by

$$\gamma = \operatorname{arctg} \left( \frac{2R}{L_0} \operatorname{arccos} \frac{m}{\nu_{mp}} \right).$$

3. A converter according to Claim 2 characterized by that the length L of the section (1) of the irregular waveguide is at least equal to $3L_0$.

4. A converter according to Claim 3, characterized by that the difference of the distances between the axis (6) of the section (1) of the irregular waveguide and the apices ($2^1$, $3^1$) of the neighboring focusing and scattering microwave mirrors (2, 3) increases gradually from zero at the input end (4) of the irregular waveguide section (1) to a value at least equal to

$$\left[\frac{2\pi}{\nu_{mp}}\right]^2 R_0$$

at the output end (5).

5. A converter according to any one of Claims 1 to 4, characterized by that the surface of each focusing microwave mirror (2) represents essentially a part of a quadric surface with a positive Gaussian curvature.

6. A converter according to any one of Claims 1 to 4, characterized by that the last mirror at the output end (5) of the section (1) of the irregular waveguide is the focusing microwave mirror (2) whose boundary is the edge of the output end 5 of the irregular waveguide section (1).

7. A converter according to Claim 5, characterized by that the last mirror at the output end (5) of the section (1) of the irregular waveguide is the focusing microwave mirror (2) whose boundary is the edge of the output end (5) of the irregular waveguide section (1).

*FIG.1*

*FIG.2*      *FIG.3*      *FIG.4*

FIG.5

FIG.6

FIG.7

REVISED VERSION

## INTERNATIONAL SEARCH REPORT

International Application No PCT/SU 90/00001

**I. CLASSIFICATION OF SUBJECT MATTER** (if several classification symbols apply, indicate all) ⁶

According to International Patent Classification (IPC) or to both National Classification and IPC

$IPC^5$: H 01 P 1/16, H 01 J 23/36

**II. FIELDS SEARCHED**

| Minimum Documentation Searched ⁷ | |
|---|---|
| Classification System | Classification Symbols |
| H 01 P 1/16, 3/20, 5/08, | H 01 J 23/36 + 23/40, H 01 J 25/00 + 25/06, 25/34 |

Documentation Searched other than Minimum Documentation
to the Extent that such Documents are included in the Fields Searched ⁸

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| X | INTERNATIONAL ELECTRON DEVICES MEETING, 1987 (NEW YORK, US), P. CARIN ET AL."100 GH % GIROTRON DEVELOPMENT: MAIN RESULTS AND CONCLUSIONS", pages 808-811 | 1 |
| A | FR, A1, 2542928 (THOMSON-CSF), 21 September 1984, see page 16 & EP, 0122834, 1984 US, 4636689, 1987 | 1-7 |
| A | IZVESTIA VYSSHIKH UCHEBNYKH ZAVEDENY RADIOFIZIKA, VOL. XVII, No: 1, 1974 (GORKOVSKY UNIVERSITET), S.N. VLASOV et al. " KVAZIOPTICHESKY PREOBRAZOVATEL VOLN VOLNOVODA KRUGLOGO SECHENIA V UZKONAPRAVLENNY VOLNOVOY PUCHOK", see RADIOTEKHNIKA I ELEKTRONIKA, vol. XX, No: 10, 1975, (NAUKA, MOSCOW), S.N. VLASOV et al. "PREOBRAZOVANIE VOLNY SHEPCHUSCHEI GALEREI, RASPROSTRANYAJUSCHEISYA V VOLNOVODE KRUGLOGO SECHENIA V VOLNOVOI PUCHOK", see pages 2026-2030, fig. 1 (cited in the description) | 1-7 |

* Special categories of cited documents: ¹⁹

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 1 March 1990 (01.03.90) | 6 April 1990 (06.04.90) |
| International Searching Authority | Signature of Authorized Officer |
| ISA/SU | |

Form PCT/ISA/210 (second sheet) (January 1985)